# EUROPEAN PATENT SPECIFICATION

(11) **EP 0 602 729 B1**
(45) Date of publication and mention of the grant of the patent: **10.01.1996**
(21) Application number: 93203462.2
(22) Date of filing: 09.12.1993
(51) Int. Cl.: C22C 38/00

(54) **Railway joint**
Schienenverbindung
Joint de rails

(30) Priority: 15.12.1992 GB 9226081
(43) Date of publication of application: 22.06.1994
(73) Proprietor: EDGAR ALLEN ENGINEERING LIMITED, Sheffield, S9 1QW (GB); BRITISH RAILWAYS BOARD, London NW1 1DZ (GB)
(72) Inventor: Connelly, Raymond, c/o Edgar Allen Eng. Ltd., Sheffield S9 1QW (GB); Pendleton, Desmond Roy, c/o Edgar Allen Eng. Ltd., Sheffield S9 1QW (GB)
(74) Representative: Long, Edward Anthony

(56) References cited:
- EP-A- 0 070 774
- EP-A- 0 181 251
- EP-A- 0 213 111
- EP-A- 0 260 233
- EP-A- 0 467 881
- GB-A- 1 552 392
- US-A- 5 041 174
- PECKNER AND BERNSTEIN 'Handbook of Stainless Steels' 1977 , MCGRAW HILL BOOK COMPANY , US

## Description

This invention relates to joints for the rails, frogs etc., of railways, tramways, light rail transit systems etc., all hereinafter collectively referred to as "railway rails", and to a method of manufacturing such a joint.

The advantage is self-evident of inserting a component of high wear resistant, but relatively expensive, steel, - conventionally an austenitic manganese steel - at a location of anticipated high wear e.g. at a crossing or frog. Mechanical connections, usually involving fish plates, have been used to secure such austenitic manganese steel components in position, but with the increasing installation of continuously welded rail, there is an increasing demand for an austenitic manganese steel crossing etc., capable of incorporation, by welding, in continuously welded rail track. However, austenitic manganese steel cannot be welded directly to pearlitic steel due to the composition and the differing heat treatments necessary to obtain the properties required of a railway rail. Consequently, the practice has evolved of interposing an insert of a third steel of composition that is weldable to both austenitic manganese steel and to pearlitic steel. GB-A-1 552 392 discloses an insert made of austenitic stainless steel, but being high in Cr and Ni this is relatively expensive and is not the simplest of materials to weld. EP-A-0 070 774 discloses a method of joining a cast manganese steel frog to carbon steel rails in which chrome nickel manganese steel inserts are welded to the frog and then the inserts are welded to the carbon steel rails, the inserts likewise being high in Cr and Ni. Also, another proposal in EP-A-0 467 881 has involved the need to effect a pre or post heat treatment e.g. at 350°C to 1000°C, to refine and temper the weld to provide enhanced fatigue resistance.

According to a first aspect of the present invention given in claim 1, there is provided a joint component for railways, comprising;
(i) an austenitic manganese steel member, including
   - manganese: 11.5 to 19% by wt
   - carbon: 0.6 to 0.95% by wt,
welded to
(ii) a bainitic steel member, including
   - boron up to: 0.01% by wt
   - molybdenum: 0.2 to 3% by wt
   - manganese: 0.3 to 3% by wt
and preferably including
- copper: up to 6% by wt
- nickel: up to 6% by wt
- chromium: up to 6% by wt,
with the weld subsequently tempered to provide enhanced fatigue resistance by a post welding heat treatment.

Clearly, for the joint component to be used to form a rail joint, then the bainitic steel member needs to have the same industry-standard rail profile as a rail of austenitic manganese steel. Furthermore, the former would normally then be welded to one end of a pearlitic steel rail length. The bainitic steel member is preferably a length of rail of industry-standard profile.

For joining to a frog etc., the bainitic steel member would again need to have a matching profile to that of the austenitic manganese steel frog member.

A second aspect of the invention given in claim 3, is directed to a method of manufacturing such a joint component.

The post-welding heat treatment is preferably effected in factory controlled conditions, and is preferably effected in a flash butt welding machine, whereby close monitoring and control of the heat treatment parameters can be made.

## Claims

1. A joint component for railways, comprising;
(i) an austenitic manganese steel member, including
manganese 11.5 to 19% by wt
carbon 0.6 to 0.95% by wt,
welded to
(ii) a bainitic steel member, including
boron up to 0.01% by wt
molybdenum 0.2 to 3% by wt
manganese 0.3 to 3% by wt
and optionally including
copper up to 6% by wt
nickel up to 6% by wt
chromium up to 6% by wt,
with the weld subsequently tempered to provide enhanced fatigue resistance by a post welding heat treatment.

2. A joint component as claimed in Claim 1, wherein the bainitic steel member is a length of rail of industry-standard profile.

3. A method of manufacturing the joint component defined in Claim 1 or Claim 2, comprising welding
(i) an austenitic manganese steel member, including
manganese 11.5 to 19% by wt
carbon 0.6 to 0.95% by wt,
to
(ii) a bainitic steel member, including
boron up to 0.01% by wt
molybdenum 0.2 to 3% by wt
manganese 0.3 to 3% by wt
which optionally includes
copper up to 6% by wt
nickel up to 6% by wt
chromium up to 6% by wt,
and then subsequently tempering the weld to provide enhanced fatigue resistance by a post welding heat treatment.

4. A method as claimed in Claim 3, wherein welding of the austenitic manganese steel member to the bainitic steel member is effected in a flash butt welding machine.

5. A method as claimed in Claim 3 or Claim 4, wherein the post welding heat treatment is effected in a flash butt welding machine.

## Patentansprüche

1. Verbindungsbauteil für das Eisenbahnwesen, mit
(i) einem Teil aus austenitischem Manganstahl mit
11.5 bis 19 Gewichts-% Mangan
0,6 bis 0,95 Gewichts-% Kohlenstoff,
wobei das Teil verschweißt ist mit
(ii) einem Teil aus bainitischem Stahl mit
bis zu 0,01 Gewichts-% Bor
0,2 bis 3 Gewichts-% Molybdän
0,3 bis 3 Gewichts-% Mangan
und wahlweise mit
bis zu 6 Gewichts-% Kupfer
bis zu 6 Gewichts-% Nickel
bis zu 6 Gewichts-% Chrom,
wobei die Schweißverbindung anschließend vergütet wird, um eine erhöhte Dauerfestigkeit durch eine Wärmenachbehandlung der Schweißung zu erzielen.

2. Verbindungsbauteil nach Anspruch 1, wobei das Teil aus bainitischem Stahl ein Schienenstück mit einem industriellen Standardprofils ist.

3. Verfahren zur Herstellung eines Verbindungsbauteils nach den Ansprüchen 1 oder 2, wobei
(i) ein Teil aus austenitischem Manganstahl mit
11,5 bis 19 Gewichts-% Mangan
0,6 bis 0,95 Gewichts-% Kohlenstoff,
(ii) einem Teil aus bainitischem Stahl mit
bis zu 0,01 Gewichts-% Bor
0,2 bis 3 Gewichts-% Molybdän
0,3 bis 3 Gewichts-% Mangan
und wahlweise mit
bis zu 6 Gewichts-% Kupfer
bis zu 6 Gewichts-% Nickel
bis zu 6 Gewichts-% Chrom,
verschweißt wird und anschließend die Schweißverbindung vergütet wird, um eine erhöhte Dauerfestigkeit durch eine Wärmenachbehandlung der Schweißung zu erzielen.

4. Verfahren nach Anspruch 3, wobei das Verschweißen des Teils aus austenitischem Manganstahl mit dem Teil aus bainitischem Stahl in einer Abbrennschweißmaschine vorgenommen wird.

5. Verfahren nach Anspruch 3 oder 4, wobei die Wärmenachbehandlung der Schweißung in einer Abbrennschweißmaschine vorgenommen wird.

## Revendications

1. Composant de jonction pour chemins de fer, comprenant :
(i) un élément en acier austénitique au manganèse, comprenant
11,5 à 19 % en poids de manganèse
0,6 à 0,95 % en poids de carbone,
soudé à
(ii) un élément en acier bainitique comprenant
jusqu'à 0,01 % en poids de bore
0,2 à 3 % en poids de molybdène
0,3 à 3 % en poids de manganèse,
et comprenant en option
jusqu'à 6 % en poids de cuivre
jusqu'à 6 % en poids de nickel
jusqu'à 6 % en poids de chrome,
la soudure étant ensuite soumise à un revenu pour obtenir une résistance améliorée à la fatigue par un traitement thermique post-soudure.

2. Composant de jonction selon la revendication 1, dans lequel l'élément en acier bainitique est une longueur de rail de profilé industriel standard.

3. Procédé de fabrication d'un composant de jonction selon la revendication 1 ou 2, comprenant le fait de souder :
(i) un élément en acier austénitique au manganèse, comprenant
11,5 à 19 % en poids de manganèse
0,6 à 0,95 % en poids de carbone,
à
(ii) un élément en acier bainitique comprenant
jusqu'à 0,01 % en poids de bore
0,2 à 3 % en poids de molybdène
0,3 à 3 % en poids de manganèse,
qui comprend en option
jusqu'à 6 % en poids de cuivre
jusqu'à 6 % en poids de nickel
jusqu'à 6 % en poids de chrome,
et de soumettre ensuite la soudure à un revenu pour obtenir une résistance améliorée à la fatigue par un traitement thermique post-soudure.

4. Procédé selon la revendication 3, dans lequel la soudure de l'élément en acier austénitique au manganèse à l'élément en acier bainitique est effectuée dans une machine de soudage par étincelage bout-à-bout.

5. Procédé selon la revendication 3 ou 4, dans lequel le traitement thermique post-soudure est effectué dans une machine de soudage par étincelage bout-à-bout.
